# EUROPEAN PATENT SPECIFICATION

(11) **EP 2 278 308 B1**
(45) Date of publication and mention of the grant of the patent: **19.12.2018**
(21) Application number: 09735890.7
(22) Date of filing: 21.04.2009
(51) Int. Cl.: G01N 27/12

(54) **GAS SENSOR**
GASSENSOR
CAPTEUR DE GAZ

(30) Priority: 22.04.2008 JP 2008111907
(43) Date of publication of application: 26.01.2011
(73) Proprietor: NGK SPARK PLUG CO., LTD., Nagoya-shi, Aichi 467-8525 (JP)
(72) Inventor: TAKAKURA, Masahiro, Nagoya-shi Aichi 467-8525 (JP); KIDA, Masahito, Nagoya-shi Aichi 467-8525 (JP); FUJITA, Koichi, Nagoya-shi Aichi 467-8525 (JP); KOJIMA, Takio, Nagoya-shi Aichi 467-8525 (JP)
(74) Representative: Zimmermann & Partner Patentanwälte mbB
(86) International application number: PCT/JP2009/001810
(87) International publication number: WO 2009/130884

(56) References cited:
- JP-A- 1 189 553
- JP-A- 4 279 853
- JP-A- 2000 074 866
- JP-A- 2008 275 603
- JP-A- 2008 309 556
- JP-A- 2008 309 556
- US-A1- 2005 285 155
- US-B1- 6 319 473
- TOBIAS J. KOPLIN ET AL: "Workflow for High Throughput Screening of Gas Sensing Materials", SENSORS, vol. 6, no. 4, 7 April 2006 (2006-04-07), pages 298-307, XP055352980, DOI: 10.3390/s6040298

## Description

### TECHNICAL FIELD

The present invention relates to a gas sensor for detecting a particular gas by use of a gas detection layer which contains SnO₂ (tin oxide) as a main component, and particularly to a gas sensor suitable as an odor sensor.

### BACKGROUND ART

Conventionally, there are known gas sensors configured such that a gas detection layer which contains a metal oxide semiconductor, such as SnO₂, as a main component contains, as an additive, one of oxide catalysts V₂O₅, P₂O₅, MoO₂, Cs₂O, and WO₃ or one of noble metals Ru, Pt, and Ag (refer to, for example, Patent Document 1). Gas sensors of this kind detect a particular gas (specifically, variation in concentration of a particular gas) through utilization of the phenomenon that electrical characteristics (e.g., impedance) of the gas detection layer vary with the concentration of a particular gas contained in a gas to be measured.

Of the above-mentioned gas sensors, those for detecting odor components, such as ethyl acetate, xylene, and NH₃, face a challenge of reducing the influence of flammable components, such as hydrogen. Specifically, an olfactory threshold for the human sense of smell is very low; i.e., the concentration of substances contained in an offensive odor or the like which a human can smell is very low (several ppb to several ppm). Thus, a gas sensor encounters difficulty in detecting these substances since sensitivity to flammable components, such as hydrogen, is much higher than sensitivity to substances contained in an offensive odor or the like.

Conventionally known gas sensors which detect oxidizing gases and cope with the above problem restrain the influence of flammable components, such as hydrogen, by means of doping WO₃ with In₂O₃, which is another metal oxide semiconductor component (refer to, for example, Patent Document 2).

Patent Document 3 discloses a gas sensor comprising SnO₂ as base with the addition of iridium, platinum and phosphorous.
Patent Document 1: Japanese Patent Application Laid-Open (*kokai*) No. H04-29049
Patent Document 2: Japanese Patent Application Laid-Open (*kokai*) No. H05-302903
Patent Document 3: United States Patent 6319473

### DISCLOSURE OF THE INVENTION

### PROBLEMS TO BE SOLVED BY THE INVENTION

The above-mentioned gas sensors in which WO₃ is doped with In₂O₃ can accordingly restrain the influence of flammable components, such as hydrogen. However, since sensitivity to oxidizing gases, such as NOₓ, increases, the influence of oxidizing gases increases, causing difficulty in detecting substances (NH₃) contained in an offensive odor or the like. As described above, gas detection layers of conventional gas sensors have not been studied for the purpose of reducing the influence of flammable gases, such as hydrogen, and the influence of oxidizing gases, such as NOₓ. Further, in addition to such a purpose, the composition of a gas detection layer for improving detection sensitivity and responsiveness to odor gases has not been studied at all.

The present invention has been conceived in view of the above circumstances, and an object of the invention is to provide a gas sensor which can reduce the influence of flammable gases, such as hydrogen, and the influence of oxidizing gases, such as NOₓ, and, as compared with conventional gas sensors, is improved in detection sensitivity (gas sensitivity) and responsiveness to odor gases.

### MEANS FOR SOLVING THE PROBLEMS

Means for solving the problems is a gas sensor according to the present invention, comprising a base, and a gas detection layer formed on the base, containing SnO₂ as a main component, and having an electrical characteristic which varies according to concentration of a particular gas contained in a gas to be detected. In the gas sensor, the gas detection layer contains SnO₂ in an amount of 90% by mass or higher and further contains Ir, P, and Pt; and Ir, P, and Pt contents in % by mass in the gas detection layer satisfy a first relationship expressed by Ir ≥ P + Pt. The sensor according to the present invention also comprises a porous cover layer covering an outer surface of the gas detection layer, the porous cover layer formed of oxide particles having an average particle size of 500 nm or less.

A method of manufacturing the said sensor is claimed in claim 9. Further embodiments are disclosed in the dependent claims.

According to the gas sensor of the present invention, the gas detection layer which contains SnO₂ in an amount of 90% by mass (90.00% by mass) or higher further contains Ir, which has a capability of occluding NOₓ, whereby an increase in sensitivity to oxidizing gases (particularly NOₓ) can be restrained. Also, the gas detection layer which contains SnO₂ in an amount of 90% by mass (90.00% by mass) or higher further contains P whose content is determined in view of Ir and Pt contents, whereby sensitivity (reactivity) to odor gases (ethyl acetate, xylene, ammonia, hydrogen sulfide, etc.) can be improved, and gas selectivity toward odor gases against flammable gases (hydrogen) can be improved. Further, the gas detection layer which contains SnO₂ in an amount of 90% by mass (90.00% by mass) or higher further contains Pt whose content is determined in view of Ir and P contents, whereby responsiveness to odor gases can be improved. Preferably, Ir, P, and Pt components are contained in the gas detection layer in such a form as to be carried on SnO₂.

A most remarkable feature of the present invention is that Ir, P, and Pt contents in % by mass in the gas detection layer satisfy the first relationship expressed by Ir ≥ P + Pt. When the Ir, P, and Pt contents satisfy the first relationship expressed by Ir ≥ P + Pt, a balance is achieved between the effect of restraining an increase in sensitivity to oxidizing gases, such as NOₓ, and the effect of improving gas selectivity toward odor gases against flammable gases (hydrogen) and responsiveness to variation in concentration of odor gases.

A plate-like substrate formed of an alumina substrate or the like, and a base having a diaphragm structure and formed by use of a silicon substrate can be used as the "base" in the present invention. Preferably, a heater for heating the gas detection layer is disposed in the interior of such a substrate and such a base having a diaphragm structure for enabling stable gas detection through activation of the gas detection layer. The gas detection layer is not necessarily formed directly on the surface of the base, but an adhesion layer may intervene between the gas detection layer and the base, for enhancing adhesion therebetween.

Further, in the gas sensor of the present invention, it is good practice to set the Ir content in the gas detection layer to 1.00% by mass or lower. This is because, at an Ir content in excess of 1.00% by mass, gas selectivity toward odor gases against flammable gases (hydrogen) may deteriorate. Preferably, in view of ensuring an action of lowering sensitivity to NOₓ, the lower limit of the Ir content in the gas detection layer is 0.05% by mass or higher.

Further, in the gas sensor of the present invention, by means of making the Pt content in the gas detection layer higher than the P content, the effect of Pt of improving responsiveness tends to be favorably exhibited. Thus, it is good practice to set the P and Pt contents in % by mass in the gas detection layer such that they satisfy the second relationship expressed by Pt > P.

Further, it is good practice for the gas sensor of the present invention to have the following configuration: the base assumes the form of a plate; the gas detection layer is provided on one side of the base; an opening portion is formed at the other side of the base opposite the one side in a region corresponding to a position of provision of the gas detection layer in the form of a cutout extending from the other side toward the one side; and a heat-generating resistor for heating the gas detection layer is embedded in the base. The thus-configured gas sensor can be reduced in size and can lower power consumption associated with heating of the gas detection layer by the heat-generating resistor.

### EFFECTS OF THE INVENTION

The gas sensor of the present invention can reduce the influence of flammable gases and the influence of oxidizing gases, such as NOₓ, and is improved in detection sensitivity (gas sensitivity) and responsiveness to odor gases as compared with conventional gas sensors.

### BEST MODE FOR CARRYING OUT THE INVENTION

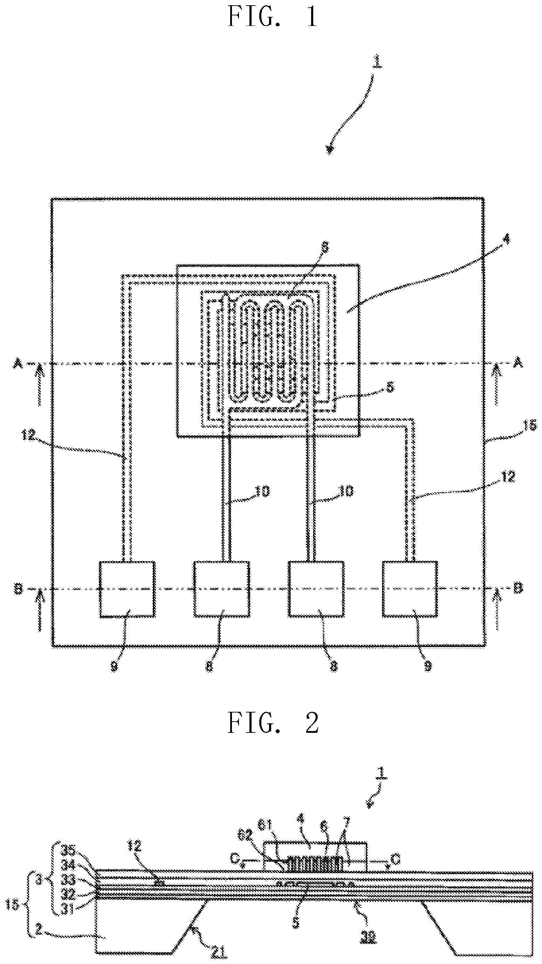

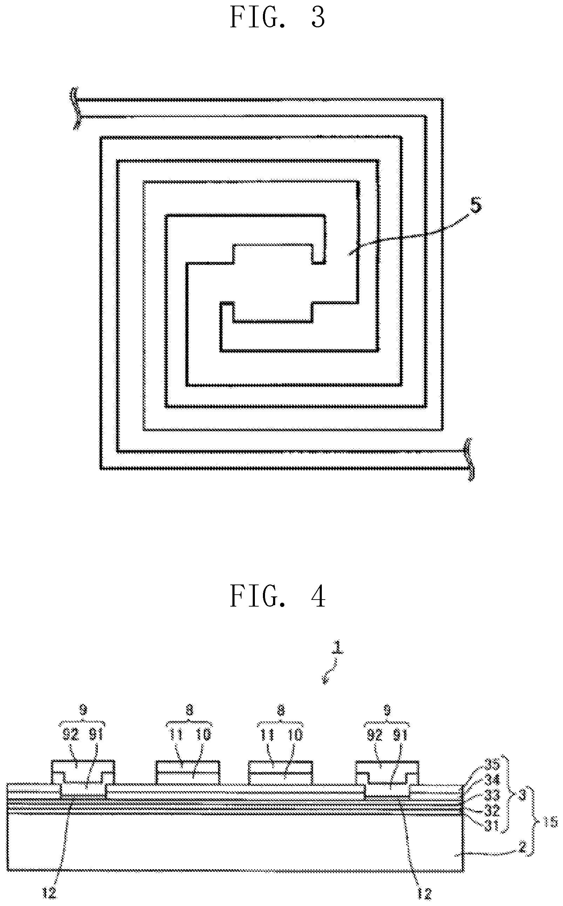

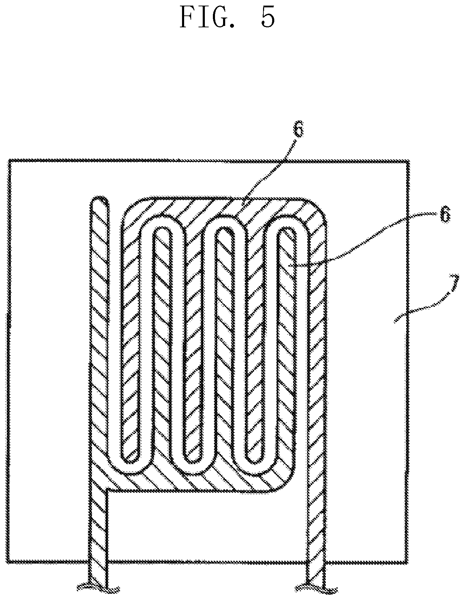

The present invention and the additional embodiments will next be described in detail with reference to the accompanying drawings. FIGS. 1 to 5 show the configuration of a gas sensor according embodiments of the present invention. FIG. 1 is a plan view of a gas sensor 1; FIG. 2 is a sectional view taken along line A-A and viewed from the direction of the arrows of FIG. 1; FIG. 3 is a plan view of a heat-generating resistor 5 of the gas sensor 1; FIG. 4 is a sectional view of the gas sensor 1 taken along line B-B and viewed from the direction of the arrows of FIG. 1; and FIG. 5 is a sectional view of the gas sensor 1 taken along line C-C and viewed from the direction of the arrows of FIG. 2.

As shown in FIG. 1, the gas sensor 1 has a rectangular planar shape having a length of 2.6 mm and a width of 2 mm. As shown in FIG. 2, the gas sensor 1 has the following structure: an insulating film layer 3 is formed on the upper surface of a silicon substrate 2; the insulating film layer 3 has a heat-generating resistor 5 formed therein; and an adhesion layer 7 and a gas detection layer 4 are formed on the upper surface of the insulating film layer 3. The gas detection layer 4 has the property of varying its resistance with a particular gas contained in a gas to be detected. The gas sensor 1 is configured to selectively detect one or more odor gases among ethyl acetate (CH₃COOC₂H₅), xylene (C₈H₁₀), ammonia (NH₃), hydrogen sulfide (H₂S), methyl sulfide ((CH3)₂S₂), methyl mercaptan (CH₃SH), trimethyl amine ((CH₃)₃N), etc. contained in a gas to be detected, by use of the gas detection layer 4. Notably, the term "detection" in the present invention encompasses not only detection of existence or nonexistence of a particular gas in a gas to be detected but also detection of variation in concentration of the particular gas. Constituent elements of the gas sensor 1 will be described below.

The silicon substrate 2 is a flat plate made of silicon (Si) and having a predetermined thickness. As shown in FIG. 2, an opening portion 21 is formed at the lower surface of the silicon substrate 2 in such a manner that a portion of the silicon substrate 2 is cut out so as to expose a portion of an insulation layer 31 as a diaphragm portion 39. That is, the gas sensor 1 has a plate-like base 15 composed of the silicon substrate 2 and the insulating film layer 3; the gas detection layer 4 is provided on one side of the base 15; and the base 15 has such a diaphragm structure that the opening portion 21 is formed in a region of the other side of the base 15 corresponding to a region where the gas detection layer 4 is provided, the opening portion extending from the other side toward the one side. The opening portion 21 is formed such that, as viewed in plane from the opening of the opening portion 21, the position of the diaphragm portion 39 coincides with the position of the gas detection layer 4 and the position of the heat-generating resistor 5 embedded in insulation layers 33 and 34.

The insulating film layer 3 is composed of the insulation layers 31, 32, 33, and 34 and a protection layer 35 formed sequentially on the upper surface of the silicon substrate 2. The insulation layer 31 formed on the upper surface of the silicon substrate 2 is a silicon oxide (SiO₂) film having a predetermined thickness. A portion of the lower surface of the insulation layer 31 is exposed to the opening portion 21 of the silicon substrate 2. The insulation layer 32 formed on the upper surface of the insulation layer 31 is a silicon nitride (Si₃N₄) film having a predetermined thickness. The insulation layer 33 formed on the upper surface of the insulation layer 32 is a silicon oxide (SiO₂) film having a predetermined thickness. The heat-generating resistor 5, lead portions 12 adapted to conduct electricity to the heat-generating resistor 5, and the insulation layer 34 are formed on the upper surface of the insulation layer 33. The insulation layer 34 is a silicon oxide (SiO₂) film having a predetermined thickness. The protection layer 35 is a silicon nitride (Si₃N₄) film having a predetermined thickness and is formed on the upper surface of the insulation layer 34. The protection layer 35 is disposed in such a manner as to cover the heat-generating resistor 5 and the lead portions 12 adapted to conduct electricity to the heat-generating resistor 5, thereby playing a role of preventing contamination of and damage to the heat-generating resistor 5 and the lead portions 12.

As shown in FIGS. 2 and 3, the heat-generating resistor 5 is located above the opening portion 21 of the silicon substrate 2 and formed between the insulation layer 33 and the insulation layer 34 in a spiral shape as viewed in plane. Also, the lead portions 12 connected to the heat-generating resistor 5 and adapted to conduct electricity to the heat-generating resistor 5 are embedded between the insulation layer 33 and the insulation layer 34. As shown in FIG. 4, heat-generating resistor contact portions 9 for connection to an external circuit are formed at respective ends of the lead portions 12. The heat-generating resistor 5 and the lead portions 12 each have a two-layer structure consisting of a platinum (Pt) layer and a tantalum (Ta) layer. Each of the heat-generating resistor contact portions 9 has such a structure that a contact pad 92 made of gold (Au) is formed on the surface of a lead electrode 91 composed of a platinum (Pt) layer and a tantalum (Ta) layer. The gas sensor 1 has a pair of the heat-generating resistor contact portions 9.

Detection electrodes 6 and lead portions 10 (see FIG. 4) adapted to conduct electricity to the detection electrodes 6 are formed on the upper surface of the protection layer 35 in such a manner as to be located on the same plane parallel to the silicon substrate 2 and above the heat-generating resistor 5. Similar to the lead electrodes 91 of the heat-generating resistor contact portions 9, the detection electrodes 6 and the lead portions 10 are each composed of a tantalum (Ta) layer formed on the protection layer 35 and a platinum (Pt) layer formed on the surface of the tantalum layer. As shown in FIG. 4, contact pads 11 made of gold (Au) are formed on the respective surfaces of ends of the lead portions 10, thereby forming oxide semiconductor contact portions 8 for connection to an external circuit. As shown in FIGS. 1 and 4, the gas sensor 1 has a pair of the oxide semiconductor contact portions 8.

As shown in FIG. 5, each of the detection electrodes 6 has a comblike planar shape, and the detection electrodes 6 are provided as a pair for detecting variation in an electrical characteristic of the gas detection layer 4. As shown in FIG. 2, surfaces 61 of the detection electrodes 6 which face the gas detection layer 4 are entirely in contact with the gas detection layer 4. Since the entire surfaces 61 of the detection electrodes 6 are in contact with the gas detection layer 4, a gas reaction at the interfaces between the gas detection layer 4 and the detection electrodes 6 is not hindered at all by other members including the adhesion layer 7. Meanwhile, surfaces 62 of the detection electrodes 6 which face the protection layer 35 are in contact with the protection layer 35. The adhesion layer 7 is provided on the protection layer 35 in a region between the detection electrodes 6 and a region around the detection electrodes 6 for enhancing adhesion between the base 15 and the gas detection layer 4 so as to prevent separation of the gas detection layer 4 from the base 15.

The adhesion layer 7 is adapted to enhance adhesion between the base 15 and the gas detection layer 4 and has an aggregate structure formed of a plurality of electrically insulative metal oxide particles. Thus, the adhesion layer 7 has an irregular surface, thereby enhancing adhesion between the base 15 and the gas detection layer 4 in the form of a thick film, by an anchoring effect of the irregular surface. The adhesion layer 7 can be formed, for example, as follows: a sol solution in which electrically insulative metal oxide particles are dispersed is applied, followed by firing for solidification.

As shown in the horizontal cross-sectional view of FIG. 5, the adhesion layer 7 is formed in a region between and a region around the paired comblike detection electrodes 6. The adhesion layer 7 may be in contact with or in noncontact with peripheral portions (sides) of the detection electrodes 6. Meanwhile, as shown in the vertical sectional view of FIG. 2, the adhesion layer 7 is not formed between the gas detection layer 4 and the detection electrodes 6, and the surfaces 61 of the detection electrodes 6 which face the gas detection layer 4 are entirely in contact with the gas detection layer 4. Further, in many cases of separation of the gas detection layer 4, separation starts from a peripheral end portion of the gas detection layer 4. However, through provision of the adhesion layer 7 of the present embodiment, the occurrence of such separation can be prevented.

Further, the adhesion layer 7 is formed from an electrically insulative metal oxide, such as alumina (Al₂O₃) or silica (SiO₂), so as to avoid affecting a gas reaction which occurs at the interfaces between the gas detection layer 4 and the detection electrodes 6. The film thickness of the adhesion layer 7 may be greater or smaller than the thickness of the detection electrodes 6.

Next, a method of manufacturing the gas sensor 1 having the above-mentioned configuration and used in Examples, which will be described later, will be described. The process of manufacturing the gas sensor 1 consists roughly of a silicon substrate fabrication process and a gas sensitive film (gas detection layer) fabrication process. First, the silicon substrate fabrication process is described.

### (Cleaning of silicon wafer)

First, a silicon wafer was immersed in a cleaning liquid and cleaned.

### (Formation of silicon oxide film)

Next, the silicon wafer was placed in a heat treatment furnace, and a silicon oxide film (insulation layer 31) having a thickness of 100 nm was formed through thermal oxidation.

### (Formation of silicon nitride film)

Next, while dichlorosilane (SiH₂Cl₂) and ammonia (NH₃) were used as source gases, a silicon nitride film (insulation layer 32) having a thickness of 200 nm was formed through LP-CVD.

### (Formation of silicon oxide film)

Next, while TEOS (tetraethoxysilane) and O₂ were used as source gases, a silicon oxide film (insulation layer 33) having a thickness of 100 nm was formed through plasma CVD.

### (Formation of heat-generating resistor)

Next, by use of a DC sputtering apparatus, a Ta layer (film thickness: 20 nm) was formed on the above silicon wafer, and then a Pt layer (film thickness: 220 nm) was formed thereon. After sputtering, resist was patterned by photolithography, followed by wet etching for forming the heat-generating resistor 5.

### (Formation of silicon oxide film)

Next, while TEOS (tetraethoxysilane) and O₂ were used as source gases, a silicon oxide film (insulation layer 34) having a thickness of 100 nm was formed through plasma CVD.

### (Formation of silicon nitride film)

Next, while dichlorosilane (SiH₂Cl₂) and ammonia (NH₃) were used as source gases, a silicon nitride film (insulation layer 35) having a thickness of 200 nm was formed through LP-CVD.

### (Formation of heat-generating resistor contact portions)

Next, resist was patterned by photolithography, followed by dry etching for etching the silicon nitride film (insulation layer 35) and the silicon oxide film (insulation layer 34). Subsequently, the heat-generating resistor contact portions 9 were formed.

### (Formation of detection electrodes)

Next, by use of a DC sputtering apparatus, a Ta layer (film thickness: 20 nm) was formed, and then a Pt layer (film thickness: 40 nm) was formed. After sputtering, resist was patterned by photolithography, followed by wet etching for forming the comblike detection electrodes 6.

### (Formation of oxide semiconductor contact portions)

Next, by use of a DC sputtering apparatus, an Au layer was formed. After sputtering, resist was patterned by photolithography, followed by wet etching for forming the oxide semiconductor contact portions 8.

### (Formation of diaphragm)

Next, in order to form the opening portion 21, the silicon wafer was immersed in a tetramethylammonium hydroxide (TMAH) solution, and then the silicon was anisotropically etched, thereby forming the silicon wafer having such diaphragm structures that the silicon substrates 2 had the respective opening portions 21 at predetermined positions to which portions of the insulation layers 31 were exposed as the diaphragm portions 39.

### (Formation of adhesion layer)

Next, the adhesion layer 7 of alumina was formed on the silicon nitride film (insulation layer 35) between and around the comblike detection electrodes 6.

### (Dicing silicon wafer)

Next, the above-mentioned silicon wafer was diced into the silicon substrates 2 (bases 15 each having a diaphragm structure) for gas sensors.

Next, the process of forming the gas detection layer 4 on each of the bases 15 yielded by the above-mentioned process will be described.

### (Preparation of paste)

A sensitive material powder to be prepared as described later was milled for one hour in a ball mill and then mixed with an appropriate amount of organic solvent. The resultant mixture was milled for four hours in the ball mill or a pot mill. To the resultant material, a binder and a viscosity modifier were added in respectively appropriate amounts, followed by milling for four hours for preparing a paste.

### (Formation of gas detection layer)

Next, the above-prepared paste was applied onto the base 15 by thick-film printing, followed by firing at 500°C for one hour for forming the gas detection layer 4.

Next, Examples and Comparative Examples of the gas sensor manufactured by the above-mentioned process will be described. The gas sensors of Examples and Comparative examples were examined for characteristics which were obtained by changing the sensitive material powder used in preparation of the above-mentioned paste.

An SnO₂ powder was prepared in such an amount that SnO₂ accounted for 99.44% by mass of the gas detection layer 4. The prepared SnO₂ powder was added to deionized water, which served as a solvent. To the resultant solvent, an iridium chloride solution, phosphoric acid, and a nitric acid solution of dinitrodiammineplatinum were added such that the gas detection layer 4 contained Ir in an amount of 0.50% by mass, P in an amount of 0.01% by mass, and Pt in an amount of 0.05% by mass (see Table 1), followed by appropriate stirring for preparing a liquid mixture. The resultant liquid mixture was dried and then fired at 600°C for one hour, thereby yielding a sensitive material powder. By use of the sensitive material powder, the gas sensor of Example 1 was manufactured by the aforementioned method.

In addition to Example 1, the gas sensors of Examples 2 to 5 and Comparative Examples 1 to 3 were manufactured by the following procedure. First, SnO₂ powders were prepared as appropriate such that the respective gas detection layers 4 contained SnO₂ in the amounts in % by mass shown in Table 1. The prepared SnO₂ powders were added respectively to deionized water, which served as a solvent. To the resultant solvents, an iridium chloride solution, phosphoric acid, and a nitric acid solution of dinitrodiammineplatinum were added such that the respective gas detection layers 4 contained Ir, P, and Pt in the amounts in % by mass shown in Table 1, followed by appropriate stirring for preparing respective liquid mixtures. The resultant liquid mixtures were dried and then fired at 600°C for one hour, thereby yielding sensitive material powders for Examples 2 to 5 and Comparative Examples 1 to 3. By use of the sensitive material powders, the gas sensors of Examples 2 to 5 and Comparative Examples 1 to 3 were fabricated by the aforementioned method.

The gas sensors were evaluated for characteristics as follows. Odor gases (ethyl acetate (CH₃COOC₂H₅) and xylene (C₈H₁₀)), a flammable gas (hydrogen), and nitrogen dioxide (NO₂) were prepared as gases to be detected. 1 ppm ethyl acetate, 1 ppm xylene, 15 ppm hydrogen, and 1 ppm nitrogen dioxide were added individually to a base gas described below, and respective gas sensitivities (the heat-generating resistors 5 were held at a constant temperature of 250°C) were measured. The base gas consisted of 20.9% O₂ and the balance N₂ and was set to a relative humidity of 40% and a temperature of 30°C.

Gas sensitivity was defined as Rg (element resistance as measured 180 seconds after addition of a gas to be detected to the base gas)/Ra (element resistance as measured when the base gas was supplied). The criterion of gas sensitivity was as follows. A value of 0.85 was taken as a boundary value for gas sensitivity to ethyl acetate and xylene. When Rg/Ra was equal to or less than the boundary value, gas sensitivity to ethyl acetate and xylene was evaluated as good. A value of 1.50 was taken as a boundary value for gas sensitivity to nitrogen dioxide. When Rg/Ra was equal to or less than the boundary value, gas sensitivity to nitrogen dioxide was evaluated as good.

For evaluation of characteristics of the gas sensors, gas selectivity toward hydrogen against odor gases was also evaluated. In evaluation of gas selectivity toward hydrogen against odor gases, gas selectivity toward hydrogen against ethyl acetate was calculated as S/N = 1 - (gas sensitivity to ethyl acetate)/1 - (gas sensitivity to hydrogen), and gas selectivity toward hydrogen against xylene was calculated as S/N = 1 - (gas sensitivity to xylene)/1 - (gas sensitivity to hydrogen). The criterion of gas selectivity was as follows. An S/N value of 1.50 was taken as a boundary value for gas selectivity. When a calculated S/N was equal to or greater than the boundary value, gas selectivity was evaluated as good.

Further, for evaluation of characteristics of the gas sensors, 1 ppm ethyl acetate and 1 ppm xylene, which were gases to be detected, were added individually to the aforementioned base gas, and respective gas responsivenesses (the heat-generating resistors 5 were held at a constant temperature of 250°C) were measured.

Gas responsiveness was defined as Rgd (element resistance as measured 10 seconds after addition of a gas to be detected to the base gas)/Ra (element resistance as measured when the base gas was supplied). The criterion of gas responsiveness was as follows. A value of 0.90 was taken as a boundary value for gas selectivity. When Rgd/Ra was equal to or less than the boundary value, gas responsiveness was evaluated as good.

The gas sensors of Examples 1 to 5 and Comparative Examples 1 to 3 were evaluated as mentioned above, and the results of evaluation of the characteristics are shown in Table 1. The gas sensor of Comparative Example 3 was evaluated only for gas sensitivity to nitrogen dioxide; thus, only the result of evaluation of the gas sensitivity appears in Table 1.

**[Table 1]**

| | Content in gas detection layer (% by mass) | | | | Gas selectivity (S/N) | | Gas sensitivity (Rg/Ra) | | | | Gas responsiveness (Rgr/Ra) | |
|---|---|---|---|---|---|---|---|---|---|---|---|---|
| | SnO₂ | Ir | Pt | P | Ethyl acetate/ hydrogen | Xylene/ hydrogen | Ethyl acetate | Xylene | Hydrogen | Nitrogen dioxide | Ethyl acetate | Xylene |
| example 1 | 99.44 | 0.50 | 0.05 | 0.01 | 3.33 | 4.42 | 0.60 | 0.47 | 0.88 | 1.13 | 0.72 | 0.71 |
| example 2 | 99.87 | 0.07 | 0.05 | 0.01 | 2.71 | 1.68 | 0.24 | 0.53 | 0.72 | 1.31 | 0.50 | 0.71 |
| example 3 | 99.25 | 0.50 | 0.20 | 0.05 | 2.14 | 3.93 | 0.70 | 0.45 | 0.86 | 1.11 | 0.80 | 0.62 |
| example 4 | 99.00 | 0.50 | 0.40 | 0.10 | 1.50 | 2.13 | 0.76 | 0.66 | 0.84 | 1.10 | 0.88 | 0.83 |
| example 5 | 98.94 | 1.00 | 0.05 | 0.01 | 1.67 | 4.44 | 0.85 | 0.60 | 0.91 | 1.03 | 0.89 | 0.72 |
| Comp. Ex. 1 | 98.85 | 0.50 | 0.60 | 0.05 | 0.60(*) | 1.40(*) | 0.88(*) | 0.72 | 0.80 | 1.09 | 0.93(*) | 0.86 |
| Comp. Ex. 2 | 98.90 | 0.50 | 0.40 | 0.20 | 0.65(*) | 1.18(*) | 0.74 | 0.53 | 0.60 | 1.08 | 0.92(*) | 0.77 |
| Comp. Ex. 3 | 99.94 | 0.00 | 0.05 | 0.01 | - | - | - | - | - | 1.73(*) | - | - |

| | | | | | | | | | | | | |
|---|---|---|---|---|---|---|---|---|---|---|---|---|
| i) Gas selectivity less than an S/N criterion of 1.50 is marked with *. ii) Gas sensitivity to ethyl acetate and xylene in excess of a criterion of 0.85 is marked with *. iii) Gas sensitivity to nitrogen dioxide in excess of a criterion of 1.50 is marked with *. iv) Gas responsiveness in excess of a criterion of 0.90 is marked with *. | | | | | | | | | | | | |

It has been confirmed from the evaluation results shown in Table 1 that the gas sensors of Examples 1 to 5 have good sensitivity to odor gases, such as ethyl acetate and xylene, and are restrained in sensitivity to nitrogen dioxide to a very low level. Also, the gas sensors of Examples 1 to 5 have exhibited good gas selectivity toward ethyl acetate and xylene against hydrogen. Further, the gas sensors of Examples 1 to 5 have exhibited good gas responsiveness to odor gases, such as ethyl acetate and xylene.

By contrast, the gas sensors of Comparative Examples 1 and 2, in which the Ir, P, and Pt contents in % by mass in the gas detection layer do not satisfy the first relation expressed by Ir ≥ P + Pt, have failed to exhibit good gas selectivity toward ethyl acetate and xylene against hydrogen; specifically, their gas selectivities are less than a criterion of 1.50. Also, Comparative Examples 1 and 2 have failed to exhibit good gas sensitivity and gas responsiveness. Meanwhile, the gas sensor of Comparative Example 3, in which the gas detection layer does not contain Ir, have failed to yield the effect of reducing the influence of an oxidizing gas (nitrogen dioxide); specifically, sensitivity to nitrogen dioxide is in excess of a criterion of 1.50.

The above invention is described while mentioning the adhesion layer 7 configured through application of a sol solution in which electrically insulative metal oxide particles are dispersed, and subsequent firing for solidification. However, the adhesion layer may be formed (configured) as follows: a metal layer is formed from A1 through sputtering; the metal layer is patterned as appropriate with a pattern of the detection electrodes 6 taken into account; and the resultant metal layer is oxidized. Also, according to the present invention the outer surface of the gas detection layer is covered with a porous cover layer formed of oxide particles (titanium oxide particles, aluminum oxide particles, etc.) having an average particle size of 500 nm or less (preferably, 100 nm or less) for enhancing resistance of the gas detection layer to a poisoning substance, such as silicon. In provision of the cover layer, the thickness thereof and the average particle size of oxide particles must be adjusted as appropriate so as not to greatly deteriorate the responsiveness of the gas detection layer to odor gases.

Further, the above embodiment is described while mentioning the gas detection layer 4 formed by use of SnO₂, Ir, P, and Pt as components. However, another component (e.g., an electrically insulative component, such as alumina) may be added in a trace amount so long as SnO₂ is contained in an amount of 90.00% by mass or greater, and the Ir, P, and Pt contents satisfy the above-mentioned predetermined relationship. Also, in the gas detection layers 4 of aforementioned Examples 1 to 5, the P and Pt contents in % by mass satisfy the relationship expressed by Pt > P. However, the P content may be greater than the Pt content so long as the relationship expressed by Ir ≥ P + Pt is satisfied. Nevertheless, the satisfaction of the relationship expressed by Pt > P is preferred since, although the reason is uncertain, the effect of Pt improving responsiveness tends to be favorably exhibited. Further, the above embodiment is described while mentioning thick-film printing for forming the gas detection layer 4. However, the form of the gas detection layer is not limited to a thick film. The gas detection layer may assume the form of a thin film.

### BRIEF DESCRIPTION OF THE DRAWINGS

[FIG. 1] Plan view showing the entire configuration of a gas sensor according to an embodiment of the present invention.
[FIG. 2] Sectional view of the gas sensor taken along line A-A and viewed from the direction of the arrows of FIG. 1.
[FIG. 3] Plan view of a heat-generating resistor of the gas sensor of FIG. 1.
[FIG. 4] Sectional view of the gas sensor taken along line B-B and viewed from the direction of the arrows of FIG. 1.
[FIG. 5] Sectional view of the gas sensor taken along line C-C and viewed from the direction of the arrows of FIG. 2.

### DESCRIPTION OF REFERENCE NUMERALS

1: gas sensor
2: silicon substrate
3: insulating film layer
4: gas detection layer
5: heat-generating resistor
21: opening portion

## Claims

1. A gas sensor (1) comprising:
a base (15), and
a gas detection layer (4) formed on the base, containing SnO₂ as a main component, and having an electrical characteristic which varies according to concentration of a particular gas contained in a gas to be detected, **characterised in that** a porous cover layer is covering an outer surface of the gas detection layer, the porous cover layer formed of oxide particles having an average particle size of 500 nm or less, the gas detection layer (4) contains SnO₂ in an amount of 90% by mass or higher and further contains Ir, P, and Pt, and
Ir, P, and Pt contents in % by mass in the gas detection layer (4) satisfy a first relationship expressed by Ir ≥ P + Pt.

2. A gas sensor according to claim 1, wherein the Ir content in the gas detection layer (4) is 1.00% by mass or lower.

3. A gas sensor according to claim 2, wherein the Ir content in the gas detection layer (4) is 0.05% by mass or higher.

4. A gas sensor according to any one of claims 1 to 3, wherein the P and Pt contents in % by mass in the gas detection layer (4) satisfy a second relationship expressed by Pt > P.

5. A gas sensor according to any one of claims 1 to 4, wherein:
the base (15) assumes the form of a plate, and the gas detection layer (4) is provided on one side of the base, and
an opening portion (21) is formed at the other side of the base opposite the one side in a region corresponding to a position of provision of the gas detection layer (4), the opening portion extending from the other side toward the one side, and a heat-generating resistor (5) for heating the gas detection layer is embedded in the base.

6. A gas sensor according to any one of the preceding claims, wherein the base (15) has a diaphragm structure.

7. A gas sensor according to any one of the preceding claims, wherein an adhesion layer (7) is provided between the gas detection layer (4) and the base (15).

8. A gas sensor according to any one of the preceding claims, configured to selectively detect one or more odor gases among ethyl acetate, xylene, ammonia, hydrogen sulfide, methyl sulfide, methyl mercaptan, and trimethyl amine contained in a gas to be detected, by use of the gas detection layer (4).

9. A method of manufacturing a gas sensor (1), the method comprising:
a silicon substrate fabrication process of forming a base (15), and
a gas detection layer fabrication process in which a gas detection layer (4) is formed on the base, such that the gas detection layer (4) contains SnO₂ in an amount of 90% by mass or higher and further contains Ir, P, and Pt, and such that Ir, P, and Pt contents in % by mass in the gas detection layer (4) satisfy a first relationship expressed by Ir ≥ P + Pt, and
a porous cover layer fabrication process in which a porous cover layer is formed on an outer surface of the gas detection layer, such that the outer surface of the gas detection layer is covered by the porous cover layer, wherein the porous cover layer is formed of oxide particles having an average particle size of 500 nm or less.

10. The method according to claim 9, wherein the gas detection layer fabrication process includes preparation of a paste, and applying the paste onto the base (15) by thick-film printing, followed by firing for forming the gas detection layer (4).

11. The method according to any one of claims 9 to 10, wherein the silicon substrate fabrication process includes formation of a heat-generating resistor (5).

## Patentansprüche

1. Gassensor (1), umfassend:
eine Basis (15), und
eine Gasdetektionsschicht (4), die auf der Basis gebildet ist, umfassend SnO₂ als Hauptkomponente, und die eine elektrische Eigenschaft aufweist, die abhängig von der Konzentration eines bestimmten Gases, das in einem Gas, das detektiert werden soll, enthalten ist, variiert,
**dadurch gekennzeichnet, dass** eine poröse Deckschicht eine Außenfläche der Gasdetektionsschicht bedeckt, wobei die poröse Deckschicht aus Oxidpartikeln, die eine durchschnittliche Partikelgröße von 500 nm oder weniger aufweisen, gebildet ist,
die Gasdetektionsschicht (4) SnO₂ in einer Menge von 90 Gew.-% oder höher enthält, und weiterhin Ir, P und Pt enthält, und
der Anteil an Ir, P und Pt nach Gew.-% in der Gasdetektionsschicht (4) eine erste Beziehung erfüllen, die durch Ir ≥ P + Pt ausgedrückt wird.

2. Gassensor nach Anspruch 1, wobei der Ir-Anteil in der Gasdetektionsschicht (4) 1,00 Gew.-% oder weniger beträgt.

3. Gassensor nach Anspruch 2, wobei der Ir-Anteil in der Gasdetektionsschicht (4) 0,05 Gew.-% oder mehr beträgt.

4. Gassensor nach einem der Ansprüche 1 bis 3, wobei die P- und Pt-Anteile nach Gew.-% in der Gasdetektionsschicht (4) eine zweite Beziehung erfüllen, die durch Pt > P ausgedrückt wird.

5. Gassensor nach einem der Ansprüche 1 bis 4, wobei:
die Basis (15) die Form einer Scheibe annimmt, und die Gasdetektionsschicht (4) auf einer Seite der Basis bereitgestellt ist, und
wobei ein Öffnungsabschnitt (21) auf der anderen Seite der Basis, gegenüber der einen Seite in einem Bereich, der einer Position der Bereitstellung der Gasdetektionsschicht (4) entspricht, gebildet wird, wobei der Öffnungsabschnitt, der sich von der anderen Seite zu der einen Seite erstreckt, und ein wärmeerzeugender Widerstand (5) zum Erwärmen der Gasdetektionsschicht in der Basis eingebettet sind.

6. Gassensor nach einem der vorhergehenden Ansprüche, wobei die Basis (15) eine Membranstruktur aufweist.

7. Gassensor nach einem der vorhergehenden Ansprüche, wobei eine Haftschicht (7) zwischen der Gasdetektionsschicht (4) und der Basis (15) bereitgestellt ist.

8. Gassensor nach einem der vorhergehenden Ansprüche, der derart angelegt ist, um selektiv ein oder mehrere geruchsbelastete Gase unter Ethylacetat, Xylen, Ammoniak, Hydrogensulfid, Methylsulfid, Methylmercaptan und Trimethylamin zu detektieren, die in einem Gas, das detektiert werden soll, enthalten sind, indem die Gasdetektionsschicht (4) benutzt wird.

9. Verfahren zur Herstellung eines Gassensors (1), wobei das Verfahren umfasst:
ein Herstellungsverfahren für ein Siliziumsubstrat zum Bilden einer Basis (15), und
ein Herstellungsverfahren für eine Gasdetektionsschicht, wobei eine Gasdetektionsschicht (4) auf der Basis gebildet wird, sodass die Gasdetektionsschicht (4) SnO₂ in einer Menge von 90 Gew.-% oder höher enthält, und weiterhin Ir, P und Pt enthält, sodass die Anteile an Ir, P und Pt in Gew.-% in der Gasdetektionsschicht (4) eine erste Beziehung erfüllen, die durch Ir ≥ P + Pt ausgedrückt wird, und
ein Herstellungsverfahren für eine poröse Deckschicht, wobei eine durlässige Deckschicht auf einer Außenfläche der Gasdetektionsschicht gebildet wird, sodass die Außenfläche der Gasdetektionsschicht von der porösen Deckschicht bedeckt ist, wobei die poröse Deckschicht aus Oxidpartikeln gebildet ist, die eine durchschnittliche Partikelgröße von 500 nm oder weniger aufweisen.

10. Verfahren nach Anspruch 9, wobei das Herstellungsverfahren für die Gasdetektionsschicht die Zubereitung einer Paste, und das Auftragen der Paste auf die Basis (15) mittels Dickfilm-Druck beinhaltet, gefolgt von einer Feuerung, um die Gasdetektionsschicht (4) zu bilden.

11. Verfahren nach einem der Ansprüche 9 bis 10, wobei das Herstellungsverfahren für das Siliziumsubstrat das Bilden eines wärmeerzeugenden Widerstands (5) beinhaltet.

## Revendications

1. Capteur de gaz (1) comprenant :
une base (15), et
une couche de détection de gaz (4) formée sur la base, contenant du SnO₂ en tant que composant principal, et ayant une caractéristique électrique qui varie en fonction de la concentration d'un gaz particulier contenu dans un gaz devant être détecté,
**caractérisé en ce qu'**une couche de revêtement poreuse recouvre une surface extérieure de la couche de détection de gaz, la couche de revêtement poreuse étant formée de particules d'oxyde ayant une granulométrie moyenne de 500 nm ou moins,
la couche de détection de gaz (4) contient du SnO₂ en une quantité de 90 % en masse ou plus et contient en outre Ir, P et Pt, et
les teneurs en Ir, P et Pt, en % en masse, de la couche de détection de gaz (4), satisfont à une première relation représentée par Ir > P + Pt.

2. Capteur de gaz selon la revendication 1, dans lequel la teneur en Ir de la couche de détection de gaz (4) est de 1,00 % en masse ou moins.

3. Capteur de gaz selon la revendication 2, dans lequel la teneur en Ir de la couche de détection de gaz (4) est de 0,05 % en masse ou plus.

4. Capteur de gaz selon l'une quelconque des revendications 1 à 3, dans lequel les teneurs en P et Pt, en % en masse, de la couche de détection de gaz (4), satisfont à une deuxième relation représentée par Pt > P.

5. Capteur de gaz selon l'une quelconque des revendications 1 à 4, dans lequel :
la base (15) prend la forme d'une plaque, et la couche de détection de gaz (4) est disposée sur un premier côté de la base, et
une partie d'ouverture (21) est formée de l'autre côté de la base, opposé au premier côté, dans une région correspondant à une position de disposition de la couche de détection de gaz (4), la partie d'ouverture s'étendant depuis l'autre côté en direction du premier côté, et une résistance génératrice de chaleur (5) pour chauffer la couche de détection de gaz est incorporée dans la base.

6. Capteur de gaz selon l'une quelconque des revendications précédentes, dans lequel la base (15) a une structure de diaphragme.

7. Capteur de gaz selon l'une quelconque des revendications précédentes, dans lequel une couche d'adhésion (7) est disposée entre la couche de détection de gaz (4) et la base (15).

8. Capteur de gaz selon l'une quelconque des revendications précédentes, configuré pour détecter sélectivement un ou plusieurs gaz odorants parmi l'acétate d'éthyle, le xylène, l'ammoniac, le sulfure d'hydrogène, le sulfure de méthyle, le méthylmercaptan, et la triméthylamine, contenus dans un gaz devant être détecté, par utilisation de la couche de détection de gaz (4).

9. Procédé pour fabriquer un capteur de gaz (1), le procédé comprenant :
une opération de fabrication de substrat en silicium consistant à former une base (15), et
une opération de fabrication de couche de détection de gaz dans laquelle une couche de détection de gaz (4) est formée sur la base, de façon que la couche de détection de gaz (4) contienne du SnO₂ en une quantité de 90 % en masse ou plus et contienne en outre Ir, P et Pt, et de façon que les teneurs en Ir, P et Pt, en % en masse, de la couche de détection de gaz (4), satisfassent à une première relation représentée par Ir ≥ P + Pt, et
une opération de fabrication de couche de revêtement poreuse dans laquelle une couche de revêtement poreuse est formée sur une surface extérieure de la couche de détection de gaz, de façon que la surface extérieure de la couche de détection de gaz soit recouverte par la couche de revêtement poreuse, laquelle couche de revêtement poreuse est formée de particules d'oxyde ayant une granulométrie moyenne de 500 nm ou moins.

10. Procédé selon la revendication 9, dans lequel l'opération de fabrication de couche de détection de gaz comprend la préparation d'une pâte, et l'application de la pâte sur la base (15) par impression de film épais, suivie d'une cuisson pour former la couche de détection de gaz (4).

11. Procédé selon l'une quelconque des revendications 9 à 10, dans lequel l'opération de fabrication du substrat en silicium comprend la formation d'une résistance génératrice de chaleur (5).
